# EUROPEAN PATENT SPECIFICATION

(11) **EP 3 975 354 B1**
(45) Date of publication and mention of the grant of the patent: **05.07.2023**
(21) Application number: 21199179.9
(22) Date of filing: 27.09.2021
(51) Int. Cl.: H02B 1/30, H02G 3/08, H02G 3/32

(54) **SEALING ELEMENT AND CONNECTION BOX WITH SAID SEALING ELEMENT**
DICHTUNGSELEMENT UND ANSCHLUSSDOSE MIT DIESEM DICHTUNGSELEMENT
ÉLÉMENT D'ÉTANCHÉITÉ ET BOÎTE DE CONNEXION COMPRENANT LEDIT ÉLÉMENT D'ÉTANCHÉITÉ

(30) Priority: 28.09.2020 IT 202000022771
(43) Date of publication of application: 30.03.2022
(73) Proprietor: Prysmian S.p.A., 20126 Milan (IT)
(72) Inventor: Paddick, Nathan, 20126 Milano MI (IT)
(74) Representative: Perani & Partners S.p.A.

(56) References cited:
- US-A1- 2007 227 771
- US-A1- 2008 253 730
- US-A1- 2012 142 212
- US-B2- 7 544 901

## Description

### Field of the invention

The present invention relates to the field of equipment and components for the installation of cables in a connection box. In particular, the present invention relates to a sealing element and a connection box for receiving optical cables and/or electrical cables and for guaranteeing the sealing effect between the connection box and the relative entry points of the cables.

### Background of the invention

Typically, standard optical cables and pre-terminated optical cables, terminated for example with SC, LC or FC connectors, and electric cables are insertable into a connection box (such as a termination or derivation box) passing through openings formed on the connection box. Such openings are equipped with sealing elements that guarantee the tightness of the inner space of the connection box and at the same time the formation of a passage for the insertion of the cables when the cables have to be installed.

Different solutions for such sealing element are known in the art. Usually each cable/termination requires its own sealing element and relative opening in the connection box. Alternatively, another option is to lay the cable in the connection box, breaking the sealing edge around the box between the cover and the base, instead of threading through a hole in the side wall.

A sealing element for each cable/termination can create points of tightness failure for the very small dimensions which can reach. Furthermore, the breaking of the box for allowing the insertion of pre-terminated optical cable could cause the formation of cracks and the need of specific sealing element. In addition, such sealing elements increase the installation and maintenance operations.

EP3012933 discloses a cable passage seal for a cable duct, in particular for a cable duct input in a rail vehicle. The conduit passage seal comprises a split press seal comprising at least a first seal portion having at least one recess and a second seal portion having at least one recess. The recess of the first sealing part forms, together with the recess of the second sealing part, a passage opening of the press seal when the two sealing parts with their mutually facing recesses be placed on top of each other. The cable gland further comprises at least one split gasket, whose inner cross section is adapted to receive at least one cable and whose outer cross section is adapted to the through opening formed by the recesses of the first sealing part and the second sealing part. Further described is a cable penetration seal kit, a railcar with a grommet seal, and a method of assembling a grommet seal.

US 5726392 A discloses an enclosure for interconnecting multiple branch connections from a trunk communications carrier. A housing supports a terminal block having connections for multiple branch cables and includes an opening for routing signal carrying cable into the housing from the trunk communications carrier. The housing also has multiple spaced apart access openings that extend along one wall of said housing to enable branch cables to be routed away from the housing from the terminal connector. A grommet assembly has a grommet strip defining multiple exit regions spaced along the grommet strip for alignment with the access openings in said one wall of the housing when secured to the housing. A plate that overlies the grommet strip for securing the grommet strip in contact with the housing and that defines a series of spaced apart openings that align with the access openings in the one housing wall and that also align with the exit regions of the grommet strip for allowing one or more branch cables to exit the plate, grommet strip and one housing wall for connection to the terminal connector.

WO2018/024286 discloses a cable insertion and strain relief device for switch cabinets, consisting of an installation housing and a grommet housing, designed as a half-shell housing, having a plurality of cable inlets and associated seals and strain relief elements suitable for the cables to be inserted, which grommet housing can be connected to the installation housing by insertion and can be locked by means of a locking bow, is known from the prior art. However, this makes the adjustment of the length of the cables within the switch cabinet extremely difficult. Finally, the unlocked plug connector automatically has a larger distance from the switch cabinet in the complex assembly process than in the installed state. The excessively large cable length resulting therefrom produces corresponding stresses and transverse forces of the cables on the contacts/cable connections of the components within the switch cabinet. According to the invention, in the preferably one-piece housing, the strain relief elements are attached to an inner side of the housing and an assembly window is provided on an opposite side, through which assembly window the strain relief elements can be actuated. The closing of the window by means of a cover causes the seal elements to be compressed and the cables to be sealed to the housing.

Further known connection boxes with sealing entries for cables are disclosed in US2008/253730, US7544901, US2007/227771 and US2012/142212.

### Summary of the invention

The applicant has tackled the problem of providing a sealing element and connection box with this sealing element able to receive cables having different diameters and pre-terminated cables and able to guarantee the tightness of the inner space of the connection box.

The Applicant has found that providing a connection box inside the passing through aperture formed on the side wall with sealing element having a first body and a second body movable with respect to the first body to seal and unseal a portion of aperture and having a sliding line which connects openings formed on the first body for receiving the cable and joins the sealable/unsealable portion of the aperture with the openings, allows to improve the tightness of the inner space of the connection box independently of the size of the inserted cables and allows to simplify the installation/maintenance operations.

Therefore, the present invention relates to a connection box for cables comprising a side wall and an aperture on the side wall; a sealing element attached to the side wall inside the aperture for sealing the aperture, the sealing element comprising: a first body sealing a first portion of the aperture and having a plurality of sealable openings, each opening being configured to receive a portion of a cable passing through the aperture of the side wall, and a second body sealing a second portion of the aperture; wherein: the second body is movable relative to the first body to seal and unseal the second portion of the aperture for inserting a cable in the second portion of the aperture; the first body has a sliding line mutually connecting the openings and joining the second portion of the aperture with the openings, said sliding line allowing a cable passing through the second portion of the aperture to slide along the sliding line between the second portion of the aperture and the openings; the first body has resilient properties such that, during the passage of the cable along the sliding line, the first body deforms along a deformation direction perpendicular to the sliding line.

According to one embodiment, the second portion of the aperture defines an insertion area and each opening has a receiving area smaller than the insertion area.

According to one embodiment, the first body of the sealing element is a one piece body.

According to one embodiment, the first body is associated to the second body.

According to one embodiment the sealing element comprises a connecting member connecting the first body with the second body.

According to one embodiment, the first body comprises two opposed flaps forming the sliding line and the flaps are configured to mutually space apart upon sliding of a cable along the sliding line.

According to one embodiment, the flaps are arranged in a mutually faced and close relationship for sealing the sliding line.

According to one embodiment, the connection box comprises a first plug element arranged between the flaps and configured to seal the sliding line.

According to one embodiment, the connection box comprises a second plug element arranged in one or more openings and configured to seal the openings.

The present invention further relates to a sealing element for sealing an aperture of a side wall of a connection box, said sealing element being attachable to the side wall inside the aperture and comprising: a first body configured to seal a first portion of the aperture and having a plurality of sealable openings, each opening being configured to receive a portion of a cable passing through the aperture of the side wall, and a second body configured to seal a second portion of the aperture; wherein: the second body is movable relative to the first body to seal and unseal the second portion of the aperture for inserting a cable in the second portion of the aperture; the first body has a sliding line mutually connecting the openings and joining the second portion of the aperture with the openings, said sliding line allowing a cable passing through the second portion of the aperture to slide along the sliding line between the second portion of the aperture and the openings, the first body has resilient properties such that, during the passage of the cable along the sliding line, the first body deforms along a deformation direction perpendicular to the sliding line.

The present invention further relates to sealing assembly comprising a connection box and one or more cables, each cable passing through one opening.

### Brief description of the drawings

The present invention will now be described in more detail hereinafter with reference to the accompanying drawings, in which some embodiments of the invention are shown.
FIG. 1 is an upper view of the sealing element according to one embodiment of the present invention;

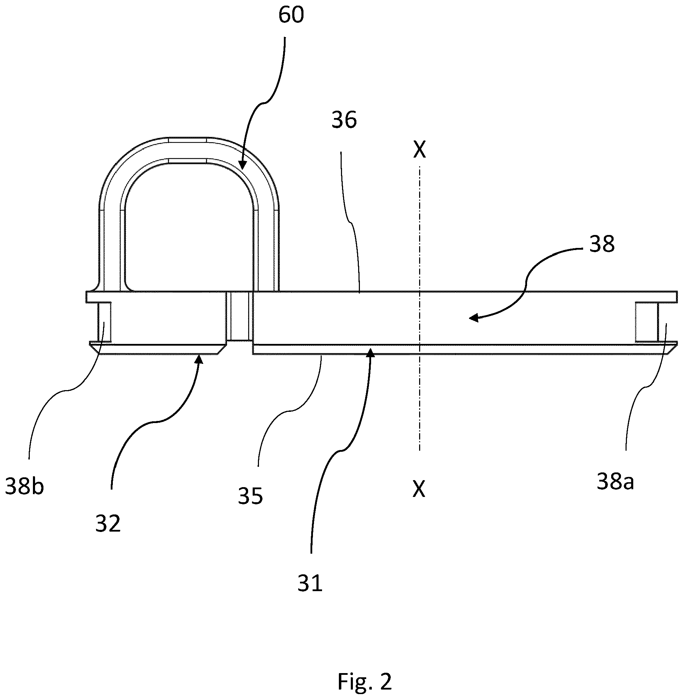

FIG. 2 is a side view of the sealing element of FIG. 1;

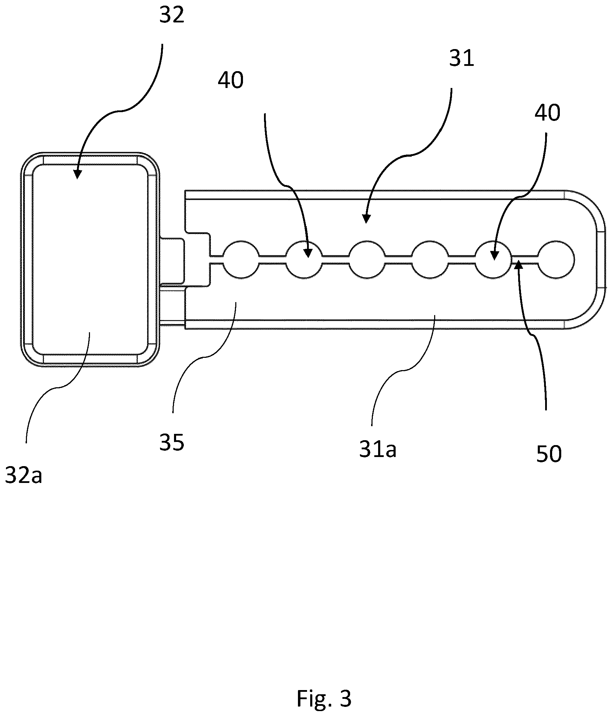

FIG. 3 is a bottom view of the sealing element of FIG. 1;
FIG. 4 is perspective view of the sealing element of FIG. 1 mounted on a connection box;
FIG. 5 is a further perspective view of the sealing element of FIG. 1 mounted on a connection box;
FIG. 6 is a further perspective view of the sealing element of FIG. 1 mounted on a connection box;

### Detailed description

For the purpose of the present invention, a cable is deemed to be any optical cable or electrical cable or hybrid cable and a connection box is deemed to be adapt to selectively receive optical cables and/or electrical cables and/or hybrid cables. Furthermore optical cables and hybrid cables can be pre-terminated with optical connectors, for example SC, LC, FC, MPO and E2000 connectors.

Each cable 1 has a developing axis A-A along which the cable 1 extends and enters/exits into/from the connection box 100. It is to be noted that, upon installation, the cable 1 has a first end portion 1a external to the connection box 100 and a pre-terminated second end portion 1b internal to the connection box 100. Preferably, the cable 1 has connecting member or pre-terminated connector 3 at the second end portion 1b insertable and retainable into the connection box 100.

Preferably, the cable 1 has an external surface 1c defined for example by a sheath.

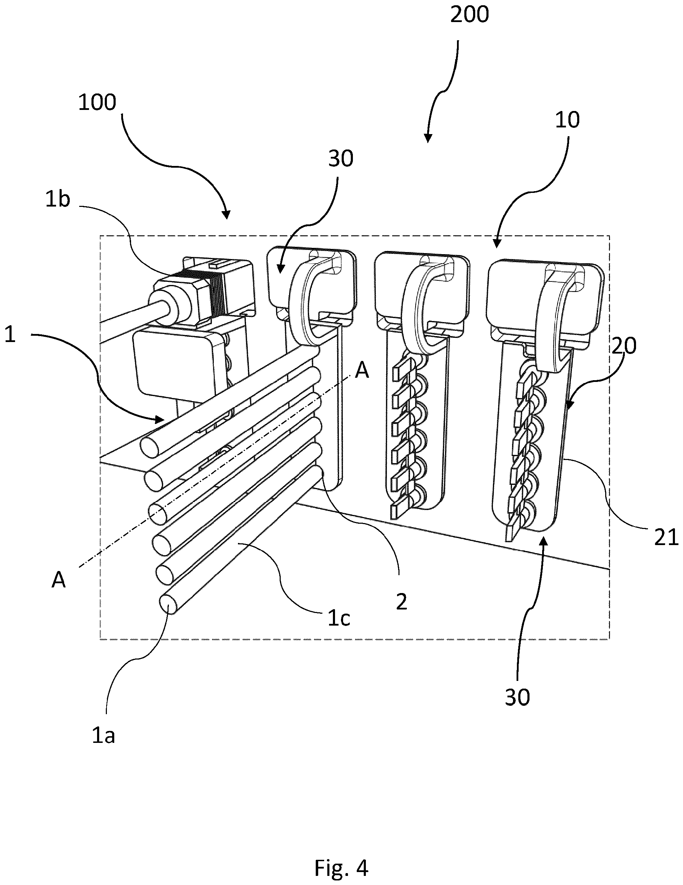

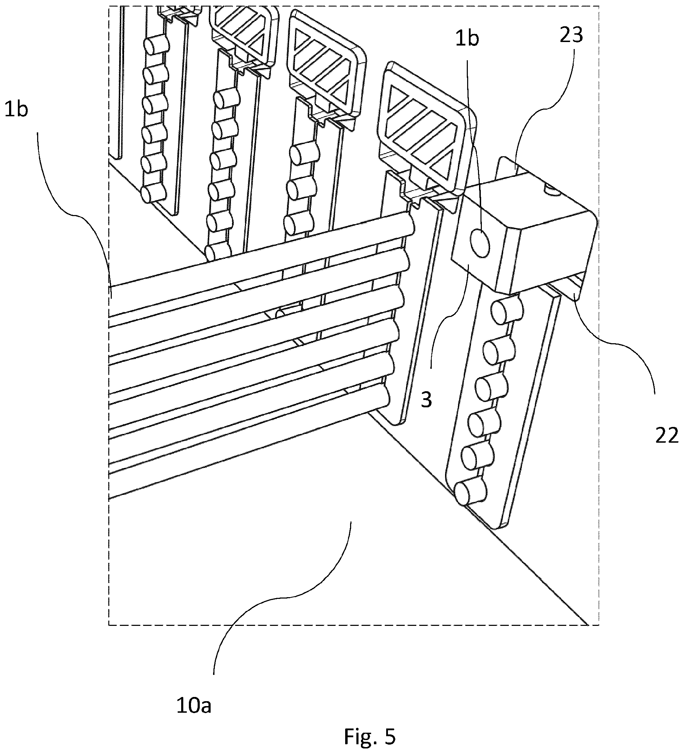

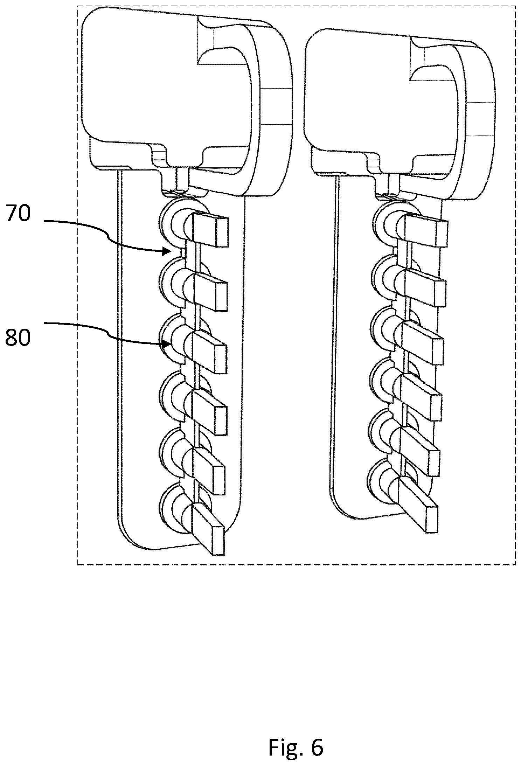

Figures 4-6 show parts of a connection box 100 able to receive and retain one or more cables 1.

The connection box 100 comprises a side wall 10 and one or more apertures 20 formed on the side wall 10. Preferably, each aperture 20 allows the insertion of second end portion 1b of the cables 1 such that a portion 2 of each cable 1 passing through the aperture 20 is arranged at the aperture 20.

More preferably, the side wall 10 defines a inner volume 10a wherein one or more adapters (not shown) are arranged for receiving connectors at the pre-terminated second end portion 1b of the cables 1 inserted in the aperture 20.

The connection box 100 comprises a sealing element 30 for sealing the aperture 20 of the side wall 10 of the connection box 100. The sealing element 30 is configured to receive the portion 2 of the cable 1 passing through the aperture 20. Thanks to the sealing element 30, the tightness of the inner volume 10a is maintained.

According to one embodiment, the sealing element 30 is removably attachable to the side wall 10 inside the aperture 20.

For sake of simplicity, in the following description, the sealing element 30 is described when mounted in the relative aperture 20. In this configuration, the sealing element 30 performs the sealing effect for the cables 1 and the aperture 20. This does not exclude the functional and technical features of the sealing element 30 when considered alone removed from the side wall 10.

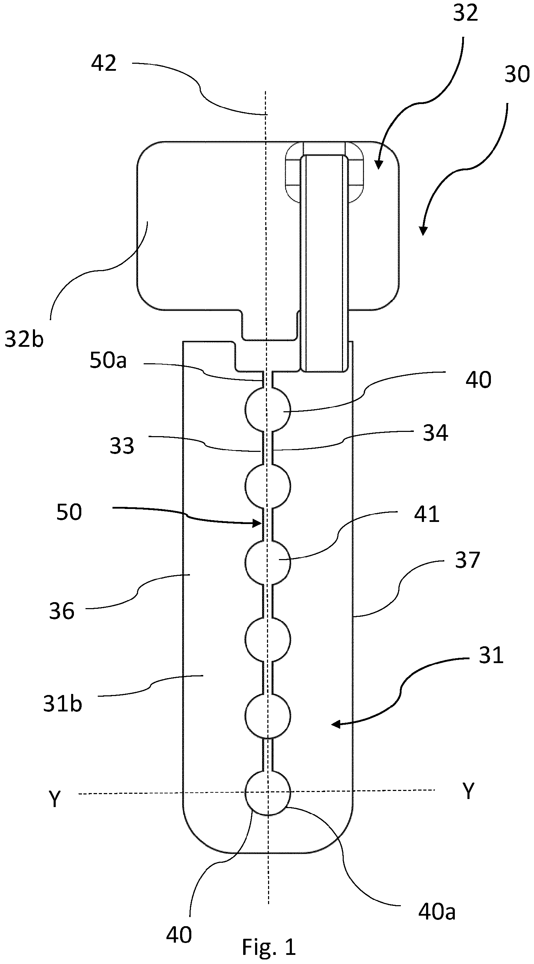

According to one embodiment, the sealing element 30 comprises a first body 31 and a second body 32 as shown in figure 1. Preferably, the first body 31 seals a first portion 21 of aperture 20 and the second body 32 seals a second portion 22 of the aperture 20.

Preferably, the sealing element 30 has an internal surface 35 facing the inner volume 10a and an opposed external surface 36 spaced apart along a longitudinal direction X-X.

It is to be noted that the first body 31 and the second body 32 have an internal surface 31a, 32a and an external surface 31b, 32b which define respectively the internal surface 35 and the external surface 36 of the sealing element 30.

According to one embodiment, the sealing element 30 has an edge portion 37 which is coupled with the side wall 10 at the aperture 20. Specifically, the edge portion 37 is defined between the internal surface 35 and the external surface 36. Preferably, the edge portion 37 has a groove 38 which engages, preferably matches, with the side wall 10 allowing the sealing element 30 to be attached to the connection box 100 in the aperture 20.

According to one embodiment, the groove 38 is divided between the first body 31 and the second body 32 respectively in a first portion groove 38a and in a second portion groove 38b.

According to an alternative embodiment, the groove 38 is only formed on the first body 31. Specifically, the first body 31 extends at least peripherally along the entire aperture 20 so as to surround and define the second portion 22 of aperture 20.

According to one embodiment, the first body 31 has a plurality of sealable openings 40. Each opening 40 defines a passing through channel 40a extending between the internal surface 31a and the external surface 31b along the longitudinal direction X-X. It is to be noted that the developing axis A-A of an inserted cable 1 in the one of the openings 40 lies along the longitudinal direction X-X. Preferably, each opening 40 is configured to receive the portion 2 of a cable 1 passing through the aperture 20 of the side wall 10.

More preferably, each opening 40 is configured to act on the external surface 1c of the cable 1 providing a sealing effect.

According to one embodiment, the openings 40 are adjacently arranged along one or more rows 42 or a path, not shown, which can have different geometries such as a "S", "C" or "U" shape.

According to one embodiment, the second portion 22 of the aperture 20 defines an insertion area 23 configured to receive a connector at the pre-terminated second end portion 1b of the cable 1. Accordingly, each opening 40 has a receiving area 41 smaller than the insertion area 23. Preferably, each receiving area 41 is configured to house the portion 2 of the cable 1, namely a portion of external surface 1c passing through the aperture 20 at the sealing element 30.

The second body 32 is movable relative to the first body 31 to seal and unseal the second portion 22 of the aperture 20 for inserting a pre-terminated cable 1 in the second portion 22 of the aperture 20. Preferably, the second body 32 is configured to pass between a sealing position wherein the second body 32 seals the second portion 22 of the aperture 20, more preferably plugging in the second portion 22 of the aperture 20, and an unsealing position wherein the second body 32 allows access to the second portion 22 of the aperture 20 to insert a cable 1. More preferably, the second body 32 is shaped so as to cover the insertion area 23.

The first body 31 has a sliding line 50 which mutually connects the openings 40 and joins the second portion 22 of the aperture 20 with the openings 40.

Specifically, the sliding line 50 allows a cable 1 passing through the second portion 22 of the aperture 20 to slide along the sliding line 50 between the second portion 22 of the aperture 20 and the openings 40. Upon insertion of the second end portion 1b of the cable 1 through the second portion 22 of the aperture 20, when the second body 32 is in the unsealing position, the sliding line 50 allows the cable 1 to slide from the second portion 22 of the aperture 20 to one of the openings 40.

The sliding line 50 is also configured to allow the cable 1 to move from the opening 40 to the second portion 22 of aperture 20 or to another opening 40.

Thanks to the combination of the movable second body 32 and the sliding line 50, the sealing element 30 provides a better sealing effect at the aperture 20 independently of the cable 1 inserted through the aperture 20.

In fact, when the second body 32 is moved from the sealing position to the unsealing position , the pre-terminated second end portion 1b of the cable 1 can be inserted in the second portion 22 of the aperture 20. With this arrangement, the second portion 22 of the aperture 20 acts as a universal port for inserting the pre-terminated second end portion 1b of the cable 1 into the connection box 100. Accordingly, sliding line 50 simplifies the installation operation of a cable 1 into the connection box 100 providing at the same time a sealing effect at the aperture 20.

According to one embodiment, the first body 31 comprises two opposed flaps 33, 34 forming the sliding line 50. Preferably, the flaps 33, 34 are configured to be mutually spaced apart upon sliding of the cable 1 along the sliding line 50.

The first body 31 has resilient properties such that, during the passage of the cable 1 along the sliding line 50, the first body 31 deforms along a deformation direction Y-Y perpendicular to the sliding line 50.

Preferably, upon sliding of the cable 1 along the sliding line 50, the first body 31 is configured to be compressed between the cable 1 and the side wall 10 along the deformation direction Y-Y and to elastically deform back upon the passage of the cable 1.

More preferably, the first body 31 is configured to pass between an uncompressed configuration and a compressed configuration around the sliding line 50 upon the sliding of the cable 1 along the sliding line 50.

More preferably, each flap 33, 34 is configured to be pushed along the deformation direction Y-Y towards the side wall 10 compressing the first body 31, upon passage of the cable 1 along the sliding line 50 and each flap 33, 34 is configured to be elastically pushed back towards the opposed flap 34, 33 when the cable 1 is passed.

According to one embodiment, the sealing element 30 is made of TPV rubber preferably with a shore hardness of 30-60.

According to one embodiment, the flaps 33, 34 are arranged in a mutually faced and close relationship for sealing the sliding line 50. Preferably, the flaps 33, 34 define a tightness providing a sealing effect. More preferably, the flaps 33, 34 are mutually pushed one another.

According to an alternative embodiment, the connection box 100 comprises a first plug element 70 arranged between the flaps 33, 34 and configured to seal the sliding line 50. With this embodiment, the flaps 33, 34 are at least partially spaced apart defining a passing sliding line 50.

According to one embodiment, first body 31 of the sealing element 30 is a one piece body. Preferably the sliding line 50 comprises a joining portion 50a joining the first body 31 with the second portion 22 of the aperture 20. The sliding line 50 extends between the joining portion 50a and an opening 40 which avoids the cable 1 to slide beyond.

According to one embodiment, the first body 31 is associated to the second body 32. Preferably, the first body 31 delimits, as a function of its dimensions and shape, the second portion 22 of aperture 20 and then the second body 32.

According to one embodiment, the sealing element 30 comprises a connecting member 60 connecting the first body 31 with the second body 32. The connecting member 60 joins the first body 31 and the second body 32 extending respectively from the external surfaces 31b, 32b.

According to one embodiment, the connection box 100 comprises a second plug element 80 arranged in one or more openings 40 and configured to seal the openings 40.

According to an alternative embodiment, the first plugs 70 and the second plugs 80 are connected in frangible manner such that, upon insertion of one or more cables 1, one or more of the first plugs 80 and of the second plugs 70 are removed for positioning the cable 1 in one of the openings 40.

The present invention further relates to a sealing assembly 200 shown in figures 4-6. The sealing assembly 200 comprises the connection box 100 and one or more cables 1 inserted in the aperture 20 and received in one or more openings 40 establishing a sealing effect with the openings 40 themselves. Specifically, each cable 1, passing through one opening 40, has been inserted into the aperture 20 passing through the second portion 22 of the aperture 20 upon movement of the second body 32 to unseal the second end portion 22. Furthermore each cable 1, passing through one opening 40, has been moved along the sliding line 50.

## Claims

1. Sealing element (30) for sealing an aperture (20) of a side wall (10) of a connection box (100), said sealing element (30) being attachable to the side wall (10) inside the aperture (20) and comprising:
- a first body (31) configured to seal a first portion (21) of the aperture (20) and having a plurality of sealable openings (40), each opening (40) being configured to receive a portion of a cable (1) passing through the aperture (20) of the side wall (10), and
- a second body (32) configured to seal a second portion (22) of the aperture (20); wherein:
- the second body (32) is movable relative to the first body (31) to seal and unseal the second portion (22) of the aperture (20) for inserting a cable (1) in the second portion (22) of the aperture (20);
- the first body (31) has a sliding line (50) mutually connecting the openings (40) and joining the second portion (22) of the aperture (20) with the openings (40), said sliding line (50) allowing a cable (1) passing through the second portion (22) of the aperture (20) to slide along the sliding line (50) between the second portion (22) of the aperture (20) and the openings (40),
- the first body (31) has resilient properties such that, during the passage of the cable (1) along the sliding line (50), the first body (31) deforms along a deformation direction (Y-Y) perpendicular to the sliding line (50).

2. The sealing element (30) according to claim 1, wherein the first body (31) of the sealing element (30) is a one piece body.

3. The sealing element (30) according to claim 1 or 2, wherein the first body (31) is associated to the second body (32).

4. The sealing element (30) according to claim 3, wherein the sealing element (30) comprises a connecting member (60) connecting the first body (31) with the second body (32).

5. The sealing element (30) according to any claims 1 to 4, wherein the first body (31) comprises two opposed flaps (33, 34) forming the sliding line (50), the flaps (33, 34) being configured to mutually space apart upon sliding of a cable (1) along the sliding line (50).

6. The sealing element according to claim 5, wherein the flaps (33, 34) are arranged in a mutually faced and close relationship for sealing the sliding line (50).

7. Connection box (100) for cables (1) comprising:
- a side wall (10) and an aperture (20) on the side wall (10);
- a sealing element (30) according to any of claims 1 to 6, the sealing element (30) being attached to the side wall (10) inside the aperture (20) for sealing the aperture (20), the sealing element (30) comprising:
- a first body (31) sealing a first portion (21) of the aperture (20) and having a plurality of sealable openings (40), each opening (40) being configured to receive a portion of a cable (1) passing through the aperture (20) of the side wall (10), and
- a second body (32) sealing a second portion (22) of the aperture (20);
wherein:
- the second body (32) is movable relative to the first body (31) to seal and unseal the second portion (22) of the aperture (2) for inserting a cable (1) in the second portion (22) of the aperture (20);- the first body (31) has a sliding line (50) mutually connecting the openings (40) and joining the second portion (22) of the aperture (20) with the openings (40), said sliding line (50) allowing a cable (1) passing through the second portion (22) of the aperture (20) to slide along the sliding line (50) between the second portion (22) of the aperture (20) and the openings (40);
- the first body (31) has resilient properties such that, during the passage of the cable (1) along the sliding line (50), the first body (31) deforms along a deformation direction (Y-Y) perpendicular to the sliding line (50).

8. The connection box (100) according to claim 7, wherein the second portion (22) of the aperture (20) defines an insertion area (23) and each opening (40) has a receiving area (41) smaller than the insertion area (23).

9. The connection box (100) according to claim 7 or 8, wherein:
- the first body (31) comprises two opposed flaps (33, 34) forming the sliding line (50), the flaps (33, 34) being configured to mutually space apart upon sliding of a cable (1) along the sliding line (50),
- the connection box (100) comprises a first plug element (70) arranged between the flaps (33, 34) and configured to seal the sliding line (50).

10. The connection box (100) according to claim 9, wherein the connection box (100) comprises a second plug element (80) arranged in one or more openings (40) and configured to seal the openings (40).

11. Sealing assembly (200) comprising:
- a connection box (100) according to any of claims 7-10;
- one or more cables (1), each cable passing through one opening (40).

## Patentansprüche

1. Dichtungselement (30) zum Abdichten einer Öffnung (20) einer Seitenwand (10) einer Anschlussdose (100), wobei das Dichtungselement (30) an der Seitenwand (10) innerhalb der Öffnung (20) befestigbar ist und umfasst:
- einen ersten Körper (31), der so konfiguriert ist, dass er einen ersten Abschnitt (21) der Öffnung (20) abdichtet und eine Vielzahl von abdichtbaren Öffnungen (40) aufweist, wobei jede Öffnung (40) so konfiguriert ist, dass sie einen Abschnitt eines Kabels (1) aufnimmt, der durch die Öffnung (20) der Seitenwand (10) verläuft, und
- einen zweiten Körper (32), der so gestaltet ist, dass er einen zweiten Abschnitt (22) der Öffnung (20) abdichtet, wobei:
- der zweite Körper (32) relativ zu dem ersten Körper (31) beweglich ist, um den zweiten Abschnitt (22) der Öffnung (20) abzudichten und freizugeben, um ein Kabel (1) in den zweiten Abschnitt (22) der Öffnung (20) einzuführen;
- der erste Körper (31) eine Gleitlinie (50) aufweist, die die Öffnungen (40) miteinander verbindet und den zweiten Abschnitt (22) der Öffnung (20) mit den Öffnungen (40) verbindet, wobei die Gleitlinie (50) es einem Kabel (1) ermöglicht, entlang der Gleitlinie (50) zwischen dem zweiten Abschnitt (22) der Öffnung (20) und den Öffnungen (40) zu gleiten,
- der erste Körper (31) elastische Eigenschaften aufweist, so dass sich der erste Körper (31) während des Durchgangs des Kabels (1) entlang der Gleitlinie (50) entlang einer Verformungsrichtung (Y-Y) verformt, die senkrecht zu der Gleitlinie (50) verläuft.

2. Das Dichtungselement (30) nach Anspruch 1, wobei der erste Körper (31) des Dichtungselements (30) ein einteiliger Körper ist.

3. Dichtungselement (30) nach Anspruch 1 oder 2, wobei der erste Körper (31) mit dem zweiten Körper (32) verbunden ist.

4. Dichtungselement (30) nach Anspruch 3, wobei das Dichtungselement (30) ein Verbindungselement (60) aufweist, das den ersten Körper (31) mit dem zweiten Körper (32) verbindet.

5. Dichtungselement (30) nach einem der Ansprüche 1 bis 4, wobei der erste Körper (31) zwei gegenüberliegende Klappen (33, 34) umfasst, die die Gleitlinie (50) bilden, wobei die Klappen (33, 34) so konfiguriert sind, dass sie sich beim Gleiten eines Kabels (1) entlang der Gleitlinie (50) voneinander entfernen.

6. Dichtungselement nach Anspruch 5, wobei die Klappen (33, 34) zum Abdichten der Gleitlinie (50) einander zugewandt und dicht angeordnet sind.

7. Anschlussdose (100) für Kabel (1) mit:
- einer Seitenwand (10) und einer Öffnung (20) in der Seitenwand (10);
- ein Dichtungselement (30) nach einem der Ansprüche 1 bis 6, wobei das Dichtungselement (30) an der Seitenwand (10) innerhalb der Öffnung (20) angebracht ist, um die Öffnung (20) abzudichten, wobei das Dichtungselement (30) umfasst:
- einen ersten Körper (31), der einen ersten Abschnitt (21) der Öffnung (20) abdichtet und eine Vielzahl von abdichtbaren Öffnungen (40) aufweist, wobei jede Öffnung (40) so konfiguriert ist, dass sie einen Abschnitt eines Kabels (1) aufnimmt, der durch die Öffnung (20) der Seitenwand (10) verläuft, und
- einen zweiten Körper (32), der einen zweiten Abschnitt (22) der Öffnung (20) abdichtet, wobei:
- der zweite Körper (32) relativ zu dem ersten Körper (31) beweglich ist, um den zweiten Abschnitt (22) der Öffnung (2) abzudichten und freizugeben, um ein Kabel (1) in den zweiten Abschnitt (22) der Öffnung (20) einzuführen;
- der erste Körper (31) eine Gleitlinie (50) aufweist, die die Öffnungen (40) miteinander verbindet und den zweiten Abschnitt (22) der Öffnung (20) mit den Öffnungen (40) verbindet, wobei die Gleitlinie (50) es einem Kabel (1), das durch den zweiten Abschnitt (22) der Öffnung (20) verläuft, ermöglicht, entlang der Gleitlinie (50) zwischen dem zweiten Abschnitt (22) der Öffnung (20) und den Öffnungen (40) zu gleiten;
- der erste Körper (31) elastische Eigenschaften aufweist, sodass sich der erste Körper (31) während des Durchgangs des Kabels (1) entlang der Gleitlinie (50) entlang einer Verformungsrichtung (Y-Y) verformt, die senkrecht zu der Gleitlinie (50) verläuft.

8. Anschlussdose (100) nach Anspruch 7, wobei der zweite Abschnitt (22) der Öffnung (20) einen Einführungsbereich (23) definiert und jede Öffnung (40) einen Aufnahmebereich (41) aufweist, der kleiner als der Einführungsbereich (23) ist.

9. Die Anschlussdose (100) nach Anspruch 7 oder 8, wobei:
- der erste Körper (31) zwei gegenüberliegende Klappen (33, 34) umfasst, die die Gleitlinie (50) bilden, wobei die Klappen (33, 34) so konfiguriert sind, dass sie sich beim Gleiten eines Kabels (1) entlang der Gleitlinie (50) voneinander entfernen,
- die Anschlussdose (100) ein erstes Verschlusselement (70) umfasst, das zwischen den Klappen (33, 34) angeordnet und so konfiguriert ist, dass es die Gleitlinie (50) abdichtet.

10. Verbindungskasten (100) nach Anspruch 9, wobei der Verbindungskasten (100) ein zweites Verschlusselement (80) umfasst, das in einer oder mehreren Öffnungen (40) angeordnet und so konfiguriert ist, dass es die Öffnungen (40) verschließt.

11. Dichtungsanordnung (200), umfassend:
- eine Anschlussdose (100) nach einem der Ansprüche 7 - 10;
- ein oder mehrere Kabel (1), wobei jedes Kabel durch eine Öffnung (40) verläuft.

## Revendications

1. Elément d'étanchéité (30) pour rendre étanche un orifice (20) d'une paroi latérale (10) d'une boîte de connexions (100), ledit élément d'étanchéité (30) pouvant être attaché à la paroi latérale (10) à l'intérieur de l'orifice (20) et comprenant :
- un premier corps (31) configuré pour rendre étanche une première portion (21) de l'orifice (20) et présentant une pluralité d'ouvertures (40) pouvant être scellées, chaque ouverture (40) étant configurée pour recevoir une portion d'un câble (1) passant à travers l'orifice (20) de la paroi latérale (10), et
- un second corps (32) configuré pour rendre étanche une seconde portion (22) de l'orifice (20) ;
dans lequel :
- le second corps (32) est mobile par rapport au premier corps (31) pour rendre étanche et rendre non étanche la seconde portion (22) de l'orifice (20) afin d'insérer un câble (1) dans la seconde portion (22) de l'orifice (20) ;
- le premier corps (31) présente une ligne de glissement (50) reliant mutuellement les ouvertures (40) et joignant la seconde portion (22) de l'orifice (20) avec les ouvertures (40), ladite ligne de glissement (50) permettant à un câble (1) passant à travers la seconde portion (22) de l'orifice (20) de glisser le long de la ligne de glissement (50) entre la seconde portion (22) de l'orifice (20) et les ouvertures (40),
- le premier corps (31) présente des propriétés résilientes de sorte que pendant le passage du câble (1) le long de la ligne de glissement (50), le premier corps (31) se déforme le long d'une direction de déformation (Y-Y) perpendiculaire à la ligne de glissement (50).

2. Elément d'étanchéité (30) selon la revendication 1, dans lequel le premier corps (31) de l'élément d'étanchéité (30) est un corps en une pièce.

3. Elément d'étanchéité (30) selon la revendication 1 ou 2, dans lequel le premier corps (31) est associé au second corps (32).

4. Elément d'étanchéité (30) selon la revendication 3, dans lequel l'élément d'étanchéité (30) comprend un élément de liaison (60) reliant le premier corps (31) au second corps (32).

5. Elément d'étanchéité (30) selon l'une quelconque des revendications 1 à 4, dans lequel le premier corps (31) comprend deux volets opposés (33, 34) formant la ligne de glissement (50), les volets (33, 34) étant configurés pour s'espacer mutuellement suite au glissement d'un câble (1) le long de la ligne de glissement (50).

6. Elément d'étanchéité selon la revendication 5, dans lequel les volets (33, 34) sont agencés en regard et de manière rapprochée l'un de l'autre pour rendre étanche la ligne de glissement (50).

7. Boîte de connexion (100) pour des câbles (1) comprenant :
- une paroi latérale (10) et un orifice (20) sur la paroi latérale (10) ;
- un élément d'étanchéité (30) selon l'une quelconque des revendications 1 à 6, l'élément d'étanchéité (30) étant attaché à la paroi latérale (10) à l'intérieur de l'orifice (20) pour rendre étanche l'orifice (20), l'élément d'étanchéité (30) comprenant :
- un premier corps (31) rendant étanche une première portion (21) de l'orifice (20) et présentant une pluralité d'ouvertures (40) pouvant être scellées, chaque ouverture (40) étant configurée pour recevoir une portion d'un câble (1) passant à travers l'orifice (20) de la paroi latérale (10), et
- un second corps (32) rendant étanche une seconde portion (22) de l'orifice (20) ;
dans laquelle :
- le second corps (32) est mobile par rapport au premier corps (31) pour rendre étanche et rendre non étanche la seconde portion (22) de l'orifice (2) afin d'insérer un câble (1) dans la seconde portion (22) de l'orifice (20) ;
- le premier corps (31) présente une ligne de glissement (50) reliant mutuellement les ouvertures (40) et joignant la seconde portion (22) de l'orifice (20) avec les ouvertures (40), ladite ligne de glissement (50) permettant à un câble (1) passant à travers la seconde portion (22) de l'orifice (20) de glisser le long de la ligne de glissement (50) entre la seconde portion (22) de l'orifice (20) et les ouvertures (40) ;
- le premier corps (31) présente des propriétés résilientes de sorte que pendant le passage du câble (1) le long de la ligne de glissement (50), le premier corps (31) se déforme le long d'une direction de déformation (Y-Y) perpendiculaire à la ligne de glissement (50).

8. Boîte de connexion (100) selon la revendication 7, dans laquelle la seconde portion (22) de l'orifice (20) définit une zone d'insertion (23) et chaque ouverture (40) présente une zone de réception (41) plus petite que la zone d'insertion (23).

9. Boîte de connexion (100) selon la revendication 7 ou 8, dans laquelle :
- le premier corps (31) comprend deux volets opposés (33, 34) formant la ligne de glissement (50), les volets (33, 34) étant configurés pour s'espacer mutuellement suite au glissement d'un câble (1) le long de la ligne de glissement (50),
- la boîte de connexion (100) comprend un premier élément de bouchon (70) agencé entre les volets (33, 34) et configuré pour rendre étanche la ligne de glissement (50).

10. Boîte de connexion (100) selon la revendication 9, dans laquelle la boîte de connexion (100) comprend un second élément de bouchon (80) agencé dans une ou plusieurs ouvertures (40) et configuré pour rendre étanche les ouvertures (40).

11. Ensemble d'étanchéité (200) comprenant :
- une boîte de connexion (100) selon l'une quelconque des revendications 7 à 10 ;
- un ou plusieurs câbles (1), chaque câble passant à travers une ouverture (40).
